# EUROPÄISCHE PATENTANMELDUNG

(11) **EP 1 911 948 A2**
(43) Veröffentlichungstag der Anmeldung: **16.04.2008**
(21) Anmeldenummer: 07116284.6
(22) Anmeldetag: 13.09.2007
(51) Int. Cl.: F02C 6/18

(54) **Energieerzeugung in einer Gasturbine mit Einspeisung kohlendioxidhaltiger Gase**

(30) Priorität: 04.10.2006 EP 06121732
(71) Anmelder: BASF SE, 67056 Ludwigshafen (DE)
(72) Erfinder: Kaibel, Gerd, 68623 Lampertheim (DE); Pütter, Hermann, 67433 Neustadt (DE); Stäck, Bianca, 68165 Mannheim (DE)

(57) **Zusammenfassung**

Verfahren zur Energieerzeugung in einer Gasturbine durch Verdichten von Luft, Zugabe eines brennbaren Stoffes, Zünden dieses Gemisches in einer Brennkammer und Entspannen des heißen Gemisches in einer Gasturbine, wobei man verdichtetes Kohlendioxid oder verdichtetes kohlendioxidhaltiges Gemisch zur Verbesserung des elektrischen Wirkungsgrads und/oder der Kapazitätserhöhung zuführt.

## Beschreibung

Die vorliegende Erfindung betrifft ein verbessertes Verfahren zur Energieerzeugung in einer Gasturbine unter Nutzung von verdichtetem Kohlendioxid oder verdichteten kohlendioxidhaltigen Gemischen.

Gasturbinen werden im Bereich der Stromerzeugung zunehmend eingesetzt, da sie speziell in Kombination mit einer Dampfturbine besonders hohe Wirkungsgrade von 58 bis 59 % hinsichtlich der Stromerzeugung bieten. Der elektrische Wirkungsgrad von konventionellen Kohlekraftwerken ist demgegenüber auf etwa 45 % beschränkt.

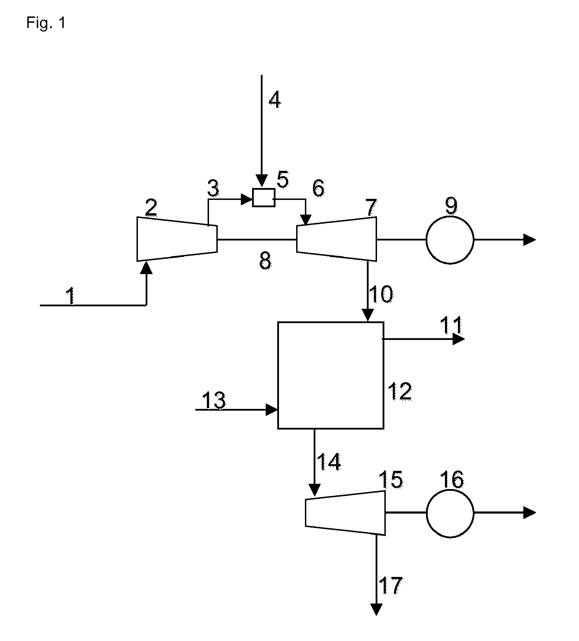

Die Wirkungsweise von Gasturbinen im Kraftwerksbereich und die spezielle Ausgestaltung als Gas- und Dampfkraftwerk ist in der Fachliteratur vielfältig beschrieben, beispielsweise in Richard Dolezal: Kombinierte Gas- und Dampfkraftwerke, Springer-Verlag GmbH & Co. KG, (2001) oder Robin Smith: Chemical Process Design and Integration, Verlag John Wiley & Sons, Ltd (2005), S. 376 - 385. Das Grundprinzip besteht darin, dass im Verdichterteil einer Gasturbine zunächst die zur Verbrennung des Kraftstoffs benötigte Luft auf etwa 15 bis 30 bar verdichtet wird. In diese verdichtete Luft wird Kraftstoff, überwiegend Erdgas, alternativ aber auch flüssiger Kraftstoff, zugegeben und gezündet. Die heißen unter Druck stehenden Verbrennungsgase werden in einer Gasturbine, die mit der Verdichterturbine mechanisch gekoppelt ist, auf Umgebungsdruck entspannt. Die noch etwa 400 bis 500°C heißen entspannten Gase werden im Falle eines Gas- und Dampfkraftwerks unter Dampferzeugung weiter abgekühlt, wobei der so erzeugte Dampf entweder als Prozessdampf zur Beheizung genutzt wird oder ebenfalls zur Stromerzeugung über eine weitere Turbine entspannt wird. Fig. 1 zeigt das Schema der Energieerzeugung mittels einer Gasturbine.

In Figur 1 sieht man die Rohrleitung (1), in der Luft aus der Umgebung angesaugt und dem Verdichter (2) zugeführt wird. Die verdichtete Luft wird über die Leitung (3) in die Brennkammer (5) geleitet, in die zusätzlich über die Leitung (4) Erdgas zur Verbrennung gegeben wird. Die heißen Verbrennungsgase werden über die Leitung (6) in die Gasturbine (7) geleitet, die zur Stromerzeugung mit dem Generator (9) mechanisch über eine Welle verbunden ist. Der Verdichter (2) ist mit der Gasturbine (7) ebenfalls mechanisch über eine Welle (8) gekoppelt. Die noch heißen Verbrennungsgase (10) aus der Gasturbine werden in einem Dampferzeuger (12) abgekühlt und über die Leitung (11) in die Umgebung abgeführt. In dem Dampferzeuger (12) wird über die Leitung (13) Kesselspeisewasser zugegeben und an Wärmetauschern mit dem heißen Abgas aus der Gasturbine (7) verdampft. Dieser so erzeugte Wasserdampf wird über die Leitung (14) der Dampfturbine (15) zugeführt. In dieser Dampfturbine (15) wird ebenfalls über einen mechanisch gekoppelten Generator (16) Strom erzeugt. Der entspannte Dampf aus der Turbine (15) wird über die Leitung (17) abgeführt und kondensiert.

Der Wirkungsgrad bei der Stromerzeugung über Gasturbinen ist durch die maximal zulässigen Temperaturen der unter Druck stehenden Brenngase im Hinblick auf die Werkstoffe der Turbinenschaufeln begrenzt. Derzeit liegen die maximal zulässigen Temperaturen bei etwa 1150 bis 1200°C. Diese Temperaturen lassen sich nur dann realisieren, wenn die Turbinenschaufeln aufwändig mit verdichteter Luft gekühlt werden, die durch eine Vielzahl von Strömungskanälen durch die einzelnen Turbinenschaufeln gepresst wird. Üblicherweise verdichtet man die Luft hierbei auf etwa 30 bis 50 bar. Die aus den Enden der Strömungskanäle austretende Luft erzeugt auf den Turbinenschaufeln einen dünnen kühlenden Gasfilm.

Unter Wirkungsgrad versteht man hierbei das Verhältnis von erzeugter elektrischer Energie zu dem unteren Heizwert der eingesetzten gasförmigen oder flüssigen Brennstoffe.

Weiterhin erweist es sich als problematisch, dass die Verbrennungstemperatur bei stöchiometrischer Verbrennung bei etwa 1500°C liegen würde, was für die Turbinenschaufeln wie bereits geschildert nicht zu tolerieren ist. Daher führt man die Verbrennung bisher bei überstöchiometrischer Fahrweise durch Zufuhr von zusätzlicher, verdichteter Luft durch. Für den elektrischen Wirkungsgrad der Turbine bedeutet die Verdichtungsleistung für die zusätzliche Luftmenge jedoch eine massive Einbuße bei dem elektrischen Wirkungsgrad.

Es stellte sich somit die Aufgabe, ein verbessertes Verfahren zur Energieerzeugung in einer Gasturbine zu finden, welches die genannten Nachteile vermeidet und das eine verfahrenstechnisch einfache Energieerzeugung bei hohem elektrischen Wirkungsgrand ermöglicht. Weiterhin soll hierbei die aufzubringende Arbeit für die Verdichtung der benötigten Luft verringert werden.

Demgemäß wurde ein Verfahren zur Energieerzeugung in einer Gasturbine durch Verdichten von Luft, Zugabe eines brennbaren Stoffes, Zünden dieses Gemisches in einer Brennkammer und Entspannen des heißen Gemisches in einer Gasturbine gefunden, welches dadurch gekennzeichnet ist, dass man verdichtetes Kohlendioxid oder verdichtetes kohlendioxidhaltiges Gemisch zur Verbesserung des elektrischen Wirkungsgrads und/oder der Kapazitätserhöhung zuführt.

Erfindungsgemäß ergeben sich für Kohlendioxid und kohlendioxidhaltige Gemische vorteilhafte Einsatzmöglichkeiten in der energetischen Nutzung bei der Stromerzeugung über Gasturbinen. Da Kohlendioxid ein dreiatomiges Gas ist, ist seine Wärmekapazität höher als die von Luft mit den zweiatomigen Gasbestandteilen Sauerstoff und Stickstoff. Hierdurch kann vorteilhafterweise eine effektivere Kühlung als durch den Einsatz von Luft realisiert werden.

Erfindungsgemäß setzt man verdichtetes Kohlendioxid oder ein verdichtetes kohlendioxidhaltiges Gemisch ein, hierbei liegen die Drücke bei etwa 20 bis 80, bevorzugt 30 bis 50 bar.

Unter der erfindungsgemäßen Energieerzeugung versteht man ein Verfahren zur Stromerzeugung in einer mechanisch gekoppelten Anordnung eines Verdichters für die Verbrennungsluft, einer gasbefeuerten oder flüssigkeitsbefeuerten Gasturbine und eines Generators, bei dem bevorzugt zur Kühlung der Turbinenschaufeln der Gasturbine anstelle von verdichteter Luft verdichtetes Kohlendioxid oder ein verdichtetes kohlendioxidhaltiges Gasgemisch durch die Kühlkanäle der Turbinenschaufeln der Gasturbine geleitet wird.

Für das erfindungsgemäße Verfahren geeignetes Kohlendioxid oder kohlendioxidhaltiges Gemisch entsteht bei vielerlei Prozessen. Technisch bedeutsame Prozesse sind beispielsweise Ammoniakanlagen, Synthesegasanlagen auf Basis gasförmiger, flüssiger oder fester Ausgangsstoffe oder Prozesse mit Oxidationsreaktionen, beispielsweise zur Gewinnung von Ethylenoxid, Phthalsäureanhydrid oder Maleinsäureanhydrid. Andere Quellen sind Sauergaswäschen oder Fermentationsprozesse. Speziell bei Gaswäschen, die mit flüssigen Lösungsmitteln zur Absorption von Kohlendioxid arbeiten, ist es technisch einfach möglich, das Kohlendioxid in mehr oder weniger reiner Form zu gewinnen.

In einer bevorzugten Ausführungsform koppelt man die erfindungsgemäße Energieerzeugung mit der energetischen Nutzung nachwachsender Rohstoffe. Für die Nutzung nachwachsender Rohstoffe sind Verfahren beschrieben, bei denen die nachwachsenden Rohstoffe in einem Überschuss von Wasser unter überkritischen Bedingungen bei Temperaturen von etwa 500 bis 700°C und Drücken von 250 bis 300 bar umgesetzt werden. Eine Beschreibung hierzu findet sich beispielsweise in N. Boukis et al.: Biomassevergasung in überkritischem Wasser, Nachrichten - Forschungszentrum Karlsruhe, Jahrgang 35, 3/2003, S. 99 - 104, oder in W. Feng et al.: Biomass conversions in subcritical and supercritical water: driving force, phase equilibria, and thermodynamic analysis, Chemical Engineering and Processing 43 (2004), S. 1459 - 1467. Nach Abkühlung des Reaktionsaustrags erhält man eine Gasmischung, die im Wesentlichen aus Wasserstoff, Methan und Kohlendioxid besteht. Unter einem Druck von etwa 50 bar kann man dieses Gasgemisch in eine Fraktion, die im Wesentlichen Wasserstoff und Methan enthält, sowie in eine Fraktion, die im Wesentlichen Kohlendioxid enthält, auftrennen. Insbesondere kann Kohlendioxid oder ein kohlendioxidhaltiges Gemisch auch in flüssiger Form abgetrennt werden. Die Umsetzung mit überkritischem Wasser mit anschließender Kohlendioxidabtrennung ist nicht nur für eine Vielzahl nachwachsender Rohstoffe, beispielsweise Produkte und Abfallstoffe aus dem Bereich der Land- und Forstwirtschaft, Abwasser und Klärschlamm, sondern grundsätzlich auch für andere Einsatzstoffe, wie organische Chemikalien, oder Brennstoffe fossilen Ursprungs, wie beispielsweise Kohle, möglich. Die Kopplung eines solchen Prozesses mit dem erfindungsgemäßen Verfahren erweist sich als besonders vorteilhaft, da hier Kohlendioxid bzw. ein diesen Stoff enthaltendes Gemisch direkt bei erhöhtem Druck anfällt und somit unmittelbar bei dem erfindungsgemäßen Verfahren eingesetzt werden kann, wodurch die Effektivität weiter gesteigert wird.

Erfindungsgemäß wird die zur Kühlung der Turbinenschaufeln benötigte Luft durch unter Druck stehendes gasförmiges Kohlendioxid ganz oder teilweise ersetzt. Da Kohlendioxid ein dreiatomiges Gas ist, ist seine Wärmekapazität höher als die von Luft mit den zweiatomigen Gasbestandteilen Sauerstoff und Stickstoff. Gegebenenfalls können für die Turbinenschaufeln einfachere und billigere konstruktive Ausführungen gewählt werden. Alternativ kann über die verbesserte Kühlung der Turbinenschaufeln die maximal zulässige Verbrennungstemperatur und damit der elektrische Wirkungsgrad gesteigert werden. Bei Verwendung von unter Druck stehendem Kohlendioxid entfällt die Verdichtungsarbeit für die Kühlluft. Dies verbessert den elektrischen Wirkungsgrad der Turbine.

Von besonderer Bedeutung ist, dass bei Einsatz von Kohlendioxid oder kohlendioxidhaltigen Gemischen Verdichtungsarbeit für die Zuluft zur Turbine eingespart werden kann. Die Verbrennungstemperatur würde bei stöchiometrischer Fahrweise bei 1500°C und mehr liegen. Sie muss durch Zufuhr zusätzlicher verdichteter Luft in überstöchiometrischer Menge auf die technisch zulässige Temperatur von 1150 bis 1200°C abgesenkt werden. Erfindungsgemäß wird die Temperaturbegrenzung ganz oder teilweise durch Zufuhr von verdichtetem Kohlendioxid vorgenommen. Zur weiteren Verbesserung des Wirkungsgrads und zur Einspeisung möglichst großer Kohlendioxidmengen wird das Kohlendioxid vor dem Einbringen in die Turbine mit Abfallwärme möglichst hoch vorgeheizt.

Eine weitere Möglichkeit besteht darin, das unter Druck stehende Kohlendioxid oder das kohlendioxidhaltige Gemisch nicht nach der Verbrennung, sondern zumindest teilweise vor der Verbrennung zuzuführen, mit dem Ziel, die maximal auftretenden Temperaturen zu begrenzen, um möglichst niedrige Bildungsraten an nitrosen Gasen zu erhalten.

Wenn das Kohlendioxid oder das kohlendioxidhaltige Gemisch nur unter einem Druck zur Verfügung steht, der niedriger ist als der üblicherweise bei etwa 10 bis 30 bar liegende Brennkammerdruck, kann die Einleitung an einer entsprechenden Stelle in der Verdichterturbine vorgenommen werden. Die konkrete Lokalisierung dieser Stelle hängt von den jeweiligen Verfahrensbedingungen ab und kann vom Fachmann durch Routineversuche ermittelt werden.

Das erfindungsgemäße Verfahren bietet eine verfahrenstechnisch einfache Art der Steigerung des elektrischen Wirkungsgrads bei der Energieerzeugung in einer Gasturbine durch Zugabe von verdichtetem Kohlendioxid oder einem kohlendioxidhaltigem Gemisch. Da es sich hierbei um ein dreiatomiges Gas handelt, wird die Effektivität im Vergleich zur Zugabe von Luft gesteigert. Besonders kommen die Vorteile zum Tragen, wenn man das erfindungsgemäße Verfahren mit Prozessen wie der Nutzung nachwachsender Rohstoffe koppelt, wo solcherlei verdichtetes Kohlendioxid anfällt und direkt dem erfindungsgemäßen Verfahren zugeführt werden kann.

## Patentansprüche

1. Verfahren zur Energieerzeugung in einer Gasturbine durch Verdichten von Luft, Zugabe eines brennbaren Stoffes, Zünden dieses Gemisches in einer Brennkammer und Entspannen des heißen Gemisches in einer Gasturbine, **dadurch gekennzeichnet, dass** man verdichtetes Kohlendioxid oder verdichtetes kohlendioxidhaltiges Gemisch zur Verbesserung des elektrischen Wirkungsgrads und/oder der Kapazitätserhöhung zuführt.

2. Verfahren nach Anspruch 1, **dadurch gekennzeichnet, dass** man verdichtetes Kohlendioxid oder kohlendioxidhaltige Gemische anstelle von verdichteter Luft in die Gasturbine zur Kühlung der Turbinenschaufeln einleitet, um die maximal zulässige Werkstofftemperatur einzuhalten.

3. Verfahren nach Ansprüchen 1 oder 2, **dadurch gekennzeichnet, dass** man Kohlendioxid oder ein kohlendioxidhaltiges Gemisch unter Druck aufheizt und gasförmig in die Gasturbine nach der Brennkammer zur Gewinnung mechanischer Leistung zuführt, wobei die Einspeisung des Kohlendioxids oder des kohlendioxidhaltigen Gemisches bevorzugt so bemessen wird, dass die maximal zulässige Werkstofftemperatur eingehalten wird und die Temperaturbegrenzung über die Zufuhr verdichteter Luft teilweise oder bevorzugt ganz entfallen kann.

4. Verfahren nach Ansprüchen 1 bis 3, **dadurch gekennzeichnet**, verdichtetes Kohlendioxid oder verdichtetes kohlendioxidhaltiges Gemisch vor der Brennkammer zuführt.

5. Verfahren nach Ansprüchen 1 bis 4, **dadurch gekennzeichnet, dass** man Kohlendioxid bzw. ein kohlendioxidhaltiges Gemisch einsetzt, welches durch Abtrennung aus einem Gemisch enthaltend Kohlendioxid, Methan und Wasserstoff mittels Entspannung oder Druckdestillation bei Temperaturen von 0 bis 30°C und Drücken von 35 bis 70 bar erhalten wurde.

6. Verfahren nach Anspruch 6, **dadurch gekennzeichnet, dass** als Ausgangsstoff für das Kohlendioxid oder kohlendioxidhaltige Gemisch nachwachsende Rohstoffe, Abfallstoffe wie Abwasser oder Klärschlamm, Produkte oder Abfallstoffe aus der Land- und Forstwirtschaft oder Gemische davon eingesetzt werden, welche in einem Überschuss von Wasser unter überkritischen Bedingungen bei Temperaturen von 500 bis 700°C und Drücken von 250 bis 300 bar umgesetzt werden, wobei hierbei nach Abkühlung des Reaktionsaustrags eine Gasmischung anfällt, welche im wesentlichen Kohlendioxid, Wasserstoff und Methan enthält.
